# EUROPÄISCHE PATENTANMELDUNG

(11) **EP 1 157 978 A1**
(43) Veröffentlichungstag der Anmeldung: **28.11.2001**
(21) Anmeldenummer: 00111170.7
(22) Anmeldetag: 24.05.2000
(51) Int. Cl.: C04B 28/02

(54) **Baustoff**

(71) Anmelder: Hund, Günther, Dr., c/o Forum of Switzerland AG., 9490 Vaduz (LI)
(72) Erfinder: Hund, Günther, Dr., c/o Forum of Switzerland AG., 9490 Vaduz (LI)
(74) Vertreter: Köchling, Conrad, Dipl.-Ing.

(57) **Zusammenfassung**

Die Erfindung des Baustoffes besteht darin, dass die Menge an Schaumpolystyrolzusatzstoffen relativ zu den übrigen Bestandteilen nicht mehr als die Hälfte beträgt. Die Gesamtgrösse darf zudem höchstens der Menge der Schaumpolystyrolzusatzstoffe entsprechen. Schließlich muss ein Bestandteil des SP-Betons ein Plastizitätsmittel vom Klutan-Typ, ein Verdünnungsmittel vom Typ Trycosal FT und/oder ein Weichmacher vom Typ Trycosal 748 C sein.

Damit unterscheidet sich der Baustoff von der bisherigen Styroporkonzeption, die ohne technologische Hilfsmittel (eingebaute Stahlelemente oder Schwerbetonelemente) keine ausreichende Statik bilden.

## Beschreibung

Es sind Styroporkonzeptionen verschiedener Zusammensetzungen bekannt, die ohne technologische Hilfsmittel (eingebaute Stahlelemente oder Schwerbetonelemente) keine ausreichende Statik (Trägheits- und Widerstandsmomente) bilden.

Der Erfindung liegt die Aufgabe zugrunde, einen Baustoff gattungsgemäßer Art zu schaffen, mit dem ohne solche Hilfsmittel eine ausreichende Statik erreichbar ist.

Gegenstand der Erfindung ist eine spezielle Schäumpolystyrol-Beton-Mischung, im weiteren SP-Beton genannt, und seine Herstellungsweise.

SP-Beton ist vor allem für die Aussenwände von Gebäuden aufgrund von gutem Bestand und Isolationseigenschaften geeignet. Bekannt sind viele Baustoffe, die durch gute Wärmeisolierung charakterisiert werden.

Das bekannte Schaumpolystyrol-Isoliermaterial, unter Berücksichtigung einer geringen Sandmenge und grossen Hydratkalkmenge, hat eine relativ geringe Beständigkeit, und daraus gefertigte Elemente sind nicht zum Transport geeignet.

Die erfindungsgemäße Lösung bezieht sich auf Beton, bei dem neben aufgeschäumten Polystyren in Form von Polystryrol-Chips oder als Körner mit einem Druchmesser von max. 4 mm und alkalischen Textilfasern verwendet werden. Es wird auch grosser Wert gelegt auf Lösungsmitel, das in aufgeschäumter Form verwendet wird sowie auf die Art des verwendeten Sandes - das heisst: Fluss- oder Lehmsand - der Korngrösse bis 2 mm oder grösser oder Flugasche und/oder porösem Dachschiefer der Korngrösse 4 - 8 mm oder 8 - 16 mm.

Das Ziel der Erfindung ist, SP-Beton mit derlei Beständigkeit herzustellen, dass ein Transport der daraus gefertigten Elemente möglich ist, dass heißt mit einer Druckbeständigkeit über 2Mpa sowie mit guten Isolationseigenschaften.

SP-Beton gemäss der Erfindung besteht aus:
- 350 - 550 kg Zement
- 200 - 700 kg Sand der Korngrösse 0,5 - 4,0 mm
- 700 - 850 dm von Schaumpolystyrol-Zuschlag
- 140 - 180 dm³ H²O
   - 0,5 - 0,8 %igem Anteil von Plastizitätszusatz min.
      0,6 kg synthetischer Faser.

Dazu fügt man 200 - 700 kg Sand der Korngrösse 0,5 bis 4,0 mm hinzu, wobei die Sandkorngrösse höchstens diejenige des Schaumpolystyrolzusatzstoffes betragen darf.
- Schaumpolystyrolzusatzstoff gibt man in der Menge von 700 - 850 dm³
- Zement der Menge 350 - 550 kg
- Fasern der Menge 0,6 kg
- H²O der Menge 140 - 180 dm³
   - Plastizitätsmittel der Menge 0,5 - 0,8 % im Verhältnis zum Zement.

Die Menge von Schaumpolystyrolzusatzstoff im Vergleich zu anderen Bestandteilen darf die Hälfte nicht überschreiten.

Günstig ist es, wenn man als Plastizitätsmittel eine Lösung vom Klutan-Typ in der Menge 0,5 - 0,8 % im Verhältnis zum Zement verwendet.

Günstige Effekte erzielt man ebenso, wenn man als Verdünnungsmittel die Lösung von Tricosal vom T - Typ der Menge bis 1 % im Verhältnis zum Zement verwendet.

Gute Ergebnisse erreicht man, wenn man zum SP-Beton ein Weichmachermittel vom Tricosal C - Typ der Menge bis 1 % im Verhältnis zum Zement hinzugibt.

Der Vorteil von SP-Beton ist überdies, daß beim Schaumpolystyrolzusatzstoff, die Korngrösse grösser oder gleich der Sandkorngrösse ist. Solche Struktur von SP-Beton bewirkt, dass die Beständigkeits-eigenschaften gut und die Thermo-Isolationseigenschaften bedeutend besser sind.

Das verwendete Plastizitätsmittel erlaubt den Erhalt guter Verarbeitung und führt zu einer einfachen und angemessenen Verdichtung der erhaltenen Mischung. Außerdem erlaubt die Anwendung des Plastizitätsmittels gemäß der Erfindung eine geringe Anzahl von H²O und damit eine sparsame Zementdosierung.

SP-Beton und seine Herstellung werden näher in den nachfolgenden Beispielen erläutert.

### Beispiel 1

Schaumpolystyrol-Chips der Korngrösse 1 - 3 mm, 680 dm³ gemischt mit einem Drittel H₂O folgend mit portländischem Zement P 35, der Menge 400 kg, 700 kg Sand der Korngrösse bis 2 mm, 0,6 kg Polypropylenfasern, Plastizitätsmittel vom Klutan-Typ, 2,8 kg sowie die restliche Menge an H₂O von 160 dm³ mischen.

Nach Durchmischen aller Bestandteile bekommt man eine einheitliche Masse von einer plastischen Konsistenz, die man in die Form giesst und sie eindickt.

### Daten des hergestellten Stoffes

Druckbelastung 5,4 Mpa
Schüttdichte kg/m³
Frischer thermoisolierender SP-Beton 1300
Staubtrockener Zustand 1200

### Beispiel 2

SP-Chips der Korngrösse 1 - 3 mm 680 dm³, gemischt mit 1/3 H2O, Zugabe 400 kg portländischen Zement P 45, 700 kg Sand der Korngrösse 0,5 - 4,0 mm, 0,6 kg Polypropylenfasern, Plastizitätsmitel vom Typ Klutan der Menge 2,0 kg sowie der restlichen Menge an H2O aus 160 dm³.

Nach der Durchmischung aller Bestandteile bekommt man eine einheitliche Masse von einer plastischen Konsistenz, die man in Form giesst und eindickt.

### Daten des hergestellten Stoffes

Druckbelastung 5,9 Mpa
Schüttdichte kg/m³
Frischer thermoisolierender SP-Beton 1300
Staubtrockener Zustand 1200

### Beispiel 3

SP-Chips der Korngrösse 1 - 3 mm, 700 dm³, gemischt mit 1/3 H₂O, Zugabe 500 kg portländischen Zement P 35, 500 kg Sand der Korngrösse 0,5 - 4,0 mm, 1,6 kg Polypropylenfasern, Plastizitätsmittel vom Typ Klutan der Menge 4,0 kg sowie der restlichen Menge an H₂O aus 180 dm³.

Nach der Durchmischung aller Bestandteile bekommt man eine einheitliche Masse von einer plastischen Konsistenz, die man in Form giesst und eindickt.

### Daten des hergestellten Stoffes

Druckbelastung 7,8 Mpa
Schüttdichte kg/m³
Frischer thermoisolierender SP-Beton 1250
Staubtrockener Zustand 1150

### Beispiel 4

SP-Chips der Korngrösse 1 - 3 mm, 680 dm³, gemischt mit 1/3 H₂O, Zugabe 400 kg portländischen Zement P 45, 700 kg Sand der Korngrösse 0,5 - 4,0 mm, 0,6 kg Polypropylenfasern, Plastizitätsmittel vom Typ Klutan der Menge 4,0 kg sowie der restlichen Menge an H₂O aus 160 dm³.

Nach der Durchmischung aller Bestandteile bekommt man eine einheitliche Masse von einer plastischen Konsistenz, die man in Form giesst und eindickt.

### Daten des hergestellten Stoffes

Druckbelastung 6,9 Mpa
Schüttdichte kg/m³
Frischer thermoisolierender SP-Beton 1300
Staubtrockener Zustand 1200

### Beispiel 5

SP-Chips der Korngrösse 1 - 3 mm, 680 dm³, gemischt mit 1/3 H₂O, Zugabe 500 kg portländischen Zement P 45, 500 kg Sand der Korngrösse 0,5 - 4,0 mm, 1,6 kg Polypropylenfasern, Plastizitätsmittel vom Typ Klutan der Menge 2,0 kg, Weichmacher vom Trycosal-Typ 748 C gleich 3,5 kg sowie der restlichen Menge an H2O aus 180 dm³.

Nach der Durchmischung aller Bestandteile bekommt man eine einheitliche Masse von einer plastischen Konsistenz, die man in Form giesst und eindickt.

### Daten des hergestellten Stoffes

Druckbelastung 7,4 Mpa
Schüttdichte kg/m³
Frischer thermoisolierender SP-Beton 1150
Staubtrockener Zustand 1050

Zukünftiges Bauen, das bedeutet energiesparende, umweltfreundliche Häuser. Der Energieverbrauch muss so niedrig sein, dass die Umweltbelastung bis zum Minimum reduziert ist. Die Idee beinhaltet den Bau oekologischer Häuser aus erfindungsgemäßem Baustoff. Weiterhin sind maximale Energieersparnisse das Ziel. Das wird erreicht durch die Anwendung des Baustoffes und konstruktiven Energiesparmassnahmen, z. B. bei speziellen Fenstern und modernen Heizungssystemen. Im Endeffekt braucht man für die Beheizung eines Einfamilienhauses ca. 700 1 Heizöl im Jahr, das sind 5 1 pro m³ jährlich. Nachfolgende Aufstellung belegt, dass der Baustoff ein zukunftsorientierter Baustoff ist.

### Wärmeleitfähigkeitswerte verschiedener Baustoffe (W/mK)

| Poroton | Erfindungs-Baustoff | Kalksandstein |
|---|---|---|
| λ = 0,45 | λ = 0,43 | λ = 0,56 |
| 1000 kg/m³ | 1000 kg/m³ | 1200 kg/m³ |
| Lochung B DIN 1045 | | |

| Isobims | Ziegel | Fiboton |
|---|---|---|
| λ = 0,9 | λ = 0,50 | λ = 0,36 |
| 1000 kg/m³ | 1200 kg/m³ | 1000 kg/m³ |

Die k-Werte kann man durch verschiedene Wandkonstruktionen weiter verbessern, z. B. durch Anwendung der äusseren, aus 10 cm dicken erfindungsgemäßen Baustoff bestehenden Wärmehaut (Rohdichte 300 bis 350 kg/m³). Auch Luftschichten und Klinkerfassaden sind möglich. Empfehlenswert ist eine Klinkerfassade als vorgefertigte Wandplatte, die schon verfugt vom Herstellerwerk geliefert wird.

Der erfindungsgemäße Baustoff ist auch frostbeständig, da er sonst keine wassersaugenden Zuschlagstoffe enthält. Die Frostbeständigkeit ist durch Versuchsergebnisse bestätigt.

Es gibt keine völlig trockenen Baustoffe, sondern es verbleibt stets eine Restfeuchte. Für erfindungsgemäße Baustoffe beträgt der praktische Feuchtegehalt 1,5 bis 9 Vol. %. Alle hierfür gültigen Wärmeschutzwerte basieren auf diesem Feuchtegehalt.

Die Wasseraufnahmekoeffizienten (durch Kapillarwirkung) einiger ausgewählter Baustoffe sind aus der Tabelle zu entnehmen. Die geringe Kapillarität des erfindungsgemäßen Baustoffes wird an diesen Werten ersichtlich.

| **Material** | **Wasseraufnahmekoeffizient W Kg/m**^{**2**}**h0,5** |
|---|---|
| Ziegel | 9,0 bis 30 |
| Kalksandstein | 4,2 bis 8,4 |
| Gasbeton | 2,4 bis 7,2 |
| Kalkzementputz | 2,1 bis 4,2 |
| Zementputz | 2,1 bis 3,0 |
| Bimsbeton | 1,8 bis 2,4 |
| Erfindungs-Baustoff | 2,1 bis 4,0. |

Die Herstellungweise gemäss der Erfindung beruht auf der Vermischung von Schaumpolystyrolzusatzstoff mit 1/3 H2O , wonach man schrittweise Zement/Sand/Fasern und eventuell Plastizitätsmittel hinzufügt. Nach nochmaligem Durchmischen fügt man das übrige Wasser zu und mischt weiter, bis man eine plastische Konsistenz hat.

Charakteristische Eigenschaft der Erfindung ist, dass die Menge an Schaumpolystyrolzusatzstoffen relativ zu den übrigen Bestandteilen nicht die Hälfte übersteigt, dass die Gesamtgrösse höchstens dieselbe ist, wie die der Schaumpolystyrolzusatzstoffe, sowie dass ein Bestandteil des SP-Beton ein Plastizitätsmittel vom Klutan-Typ ist, sowie ein Verdünnungsmittel vom Typ Trycosal FT und/oder ein Weichmacher von Typ Trycosal 748 C.

Durch die Erfindung wird ein bautechnisches Produkt (Fertigteile in verschiedenen Abmessungen ohne weitere statische Hilfsmittel) geschaffen.

Als Plastizitätszusatz (Fließmittel) können übliche Fließmittel verwendet werden, zum Beispiel Tricosal TC FT, Zulassungsnummer Z.- 3.28 - 1043.

Als Schaumbildner kann TRICOSAL, S.45 (Werbeblatt Art. 782,1.2.99) Tricosal GmbH eingesetzt werden.

Als Stabilisator kann TC Mörtel-Stabilisierer T eingesetzt werden. (Werbeblatt Art. 787, 29.1.99, Tricosal GmbH). Als Fasermaterial können Polypropylen-Spleissfasern eingesetzt werden.

## Patentansprüche

1. Baustoff, bestehend aus
350 - 550 kg Zement,
200 - 700 kg Sand, der Korngröße 0,5 bis 4,0 mm,
700 - 850 dm³ Schaumpolystryrol-Zuschlag,
140 - 180 dm³ Wasser,
0,5 - 0,8 Gewichtsprozent, bezogen auf den Zementanteil an Plastizitätszusatz sowie mindestens 0,6 kg synthetisches Fasermaterial.

2. Baustoff nach Anspruch 1, **dadurch gekennzeichnet, daß** die Korngröße des Sandes kleiner oder gleich der Korngröße des Schaumpolystyrol-Zuschlages ist.

3. Baustoff nach Anspruch 1 oder 2, **dadurch gekennzeichnet, daß** als Plastizitätsmittel eine Lösung vom Klutan-Typ zugegeben ist.

4. Baustoff nach einem der Ansprüche 1 bis 3, **dadurch gekennzeichnet, daß** als Verdünnungsmittel eine Lösung von Tricosal vom Typ-T in der Menge von bis zu 1 Gew. % bezogen auf Zement zugegeben ist.

5. Baustoff nach einem der Ansprüche 1 bis 4, **dadurch gekennzeichnet, daß** das Schaumpolystyrol in Form von Chips mit einer Korngröße von 1 - 3 mm zugegeben ist.
